# EUROPEAN PATENT SPECIFICATION

(11) **EP 2 842 034 B1**
(45) Date of publication and mention of the grant of the patent: **13.04.2016**
(21) Application number: 13722896.1
(22) Date of filing: 24.04.2013
(51) Int. Cl.: G06F 9/54, H04L 29/08

(54) **PROVIDING CLIENT AND SERVICE COMPATIBILITY THROUGH CLOUD-HOSTED ADAPTERS**
BEREITSTELLUNG VON CLIENT- UND DIENSTKOMPATIBILITÄT DURCH CLOUD-GEHOSTETE ADAPTER
FOURNITURE DE COMPATIBILITÉ CLIENT/SERVICE PAR LE BIAIS D'ADAPTATEURS HÉBERGÉS EN NUAGE

(30) Priority: 27.04.2012 US 201213458074
(43) Date of publication of application: 04.03.2015
(73) Proprietor: Microsoft Technology Licensing, LLC, Redmond, WA 98052 (US)
(72) Inventor: AZLIN, Sean, Redmond, Washington 98052-6399 (US); RAJABI, Zeyad, Redmond, Washington 98052-6399 (US); LEUNG, James, Redmond, Washington 98052-6399 (US); BROBERG, Eric, Redmond, Washington 98052-6399 (US); DOROMBOZI, Roy, Redmond, Washington 98052-6399 (US); TALEGHANI, Ali, Redmond, Washington 98052-6399 (US); PRYOR-MILLER, Andrew, Redmond, Washington 98052-6399 (US); CADWALLADER, Brice, Redmond, Washington 98052-6399 (US)
(74) Representative: Grünecker Patent- und Rechtsanwälte PartG mbB
(86) International application number: PCT/US2013/037872
(87) International publication number: WO 2013/163237

(56) References cited:
- WO-A1-99/17240
- WO-A1-2011/144029

## Description

### BACKGROUND

Client applications typically have long development cycles compared to services that live in the cloud. Client applications need to have knowledge of how to communicate with the service when the client application needs to interact with the cloud service. Client applications are typically built with service knowledge. Any built-in knowledge is invalidated subsequent to a change in the knowledge needed to communicate with a service. Rapid service changes raise the challenge of having to change the knowledge needed to communicate with services. However, client applications typically cannot be updated with improved knowledge rapidly. As a result, a client's integration with a service may be broken for a significant period of time subsequent to a service update.

Previous solutions to synchronicity issues between clients and services included continuously updating clients to try to keep the clients up-to-date. Update solutions fail when some deployments of the client can be updated infrequently due to the overhead of developing, testing, documenting, distributing, and supporting each update. Other solutions include standardizing the way clients communicate with services and building services and clients against those standards. Standardizing solutions fail when clients and services deviate from the standard, when the standard is poorly written, or when newer and better standards come out and support for older standards is no longer maintained. Yet another approach included building update mechanisms into clients to download knowledge at runtime. The knowledge is maintained in the cloud. Knowledge in the cloud can be updated more rapidly than the client. However, cloud based solutions fail when the needed knowledge is significantly different. The client has to be be updated when a client's update mechanism becomes inadequate.

### SUMMARY

This summary is provided to introduce a selection of concepts in a simplified form that are further described below in the Detailed Description. This summary is not intended to exclusively identify key features or essential features of the claimed subject matter, nor is it intended as an aid in determining the scope of the claimed subject matter.

Embodiments are directed to providing client and service compatibility through cloud-hosted adapters. An application according to embodiments may receive a client request from a client in a cloud-hosted adapter. The adapter may translate the client request to a service request for a service. Subsequently, the adapter may transmit the service request to the service and receive a service reply from the service. Next, the adapter may translate the service reply to a client reply and transmit the client reply to the client. In some embodiments, the client may send a version identifier to the server so that the adapter knows how to translate the service results for the specific client and version to understand.

These and other features and advantages will be apparent from a reading of the following detailed description and a review of the associated drawings. It is to be understood that both the foregoing general description and the following detailed description are explanatory and do not restrict aspects as claimed. Document WO 2011/144029 (ZTE Corp., 24-11-2011) discloses a cloud broker providing compatibility between client applications an services.

### BRIEF DESCRIPTION OF THE DRAWINGS

FIG. 1 illustrates an example network diagram where an application may provide client and service compatibility through cloud-hosted adapters according to some embodiments;
FIG. 2 illustrates a component diagram of an application providing client and service compatibility through cloud-hosted adapters according to embodiments;
FIG. 3 illustrates an example library update mechanism of an application providing client and service compatibility through cloud-hosted adapters according to embodiments;
FIG. 4 illustrates an example client utilizing an application providing client and service compatibility through cloud-hosted adapters according to embodiments;
FIG. 5 is a networked environment, where a system according to embodiments may be implemented;
FIG. 6 is a block diagram of an example computing operating environment, where embodiments may be implemented; and
FIG. 7 illustrates a logic flow diagram for a process providing client and service compatibility through cloud-hosted adapters according to embodiments.

### DETAILED DESCRIPTION

As briefly described above, an application may provide client and service compatibility through cloud-hosted adapters. The adapter may receive and transmit communications between a client and a service. The adapter may translate the client communication to a service communication and the service communication to a client communication according to client and service requirements for a communication.

In the following detailed description, references are made to the accompanying drawings that form a part hereof, and in which are shown by way of illustrations specific embodiments or examples. These aspects may be combined, other aspects may be utilized, and structural changes may be made without departing from the spirit or scope of the present disclosure. The following detailed description is therefore not to be taken in a limiting sense, and the scope of the present disclosure is defined by the appended claims and their equivalents.

While the embodiments will be described in the general context of program modules that execute in conjunction with an application program that runs on an operating system on a computing device, those skilled in the art will recognize that aspects may also be implemented in combination with other program modules.

Generally, program modules include routines, programs, components, data structures, and other types of structures that perform particular tasks or implement particular abstract data types. Moreover, those skilled in the art will appreciate that embodiments may be practiced with other computer system configurations, including hand-held devices, multiprocessor systems, microprocessor-based or programmable consumer electronics, minicomputers, mainframe computers, and comparable computing devices. Embodiments may also be practiced in distributed computing environments where tasks are performed by remote processing devices that are linked through a communications network. In a distributed computing environment, program modules may be located in both local and remote memory storage devices.

Embodiments may be implemented as a computer-implemented process (method), a computing system, or as an article of manufacture, such as a computer program product or computer readable media. The computer program product may be a computer storage medium readable by a computer system and encoding a computer program that comprises instructions for causing a computer or computing system to perform example process(es). The computer-readable storage medium is a non-transitory computer-readable memory device. The computer-readable storage medium can for example be implemented via one or more of a volatile computer memory, a non-volatile memory, a hard drive, a flash drive, a floppy disk, or a compact disk, and comparable media.

According to embodiments, a cloud-hosted adapter may be an interface entity to maintain communications between clients and services. The cloud-hosted adapter may accommodate multiple clients and/or multiple services. The cloud-hosted adapter may have client, service, and client user interfaces. The interfaces may be updatable while maintaining the communication structure of the client.

Throughout this specification, the term "platform" may be a combination of software and hardware components for providing client and service compatibility through cloud-hosted adapters. Examples of platforms include, but are not limited to, a hosted service executed over a plurality of servers, an application executed on a single computing device, and comparable systems. The term "server" generally refers to a computing device executing one or more software programs typically in a networked environment. However, a server may also be implemented as a virtual server (software programs) executed on one or more computing devices viewed as a server on the network. More detail on these technologies and example operations is provided below.

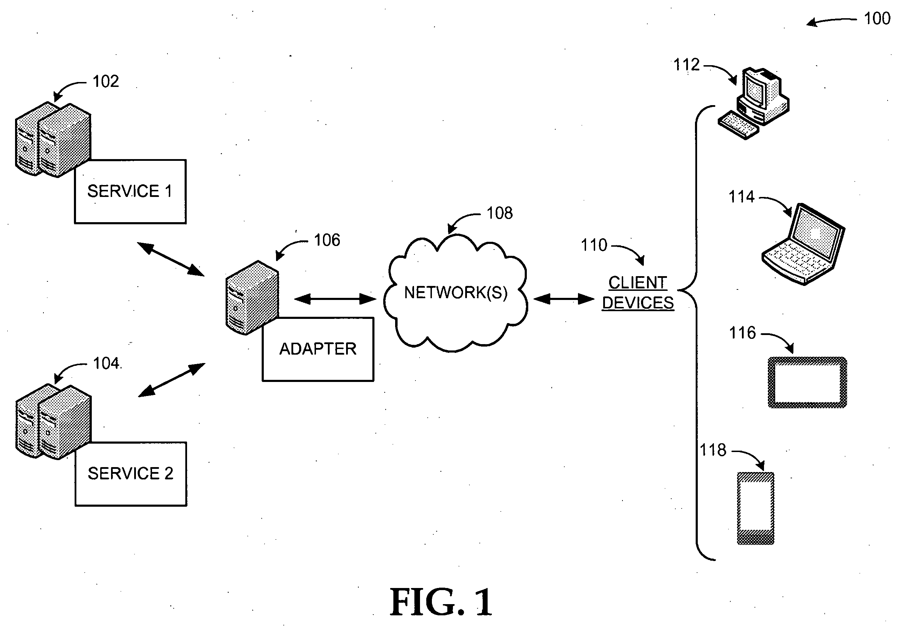

Referring to FIG. 1, diagram 100 illustrates an example network diagram where an application may provide client and service compatibility through cloud-hosted adapters according to some embodiments. The components and environments shown in diagram 100 are for illustration purposes. Embodiments may be implemented in various local, networked, cloud-based and similar computing environments employing a variety of computing devices and systems, hardware and software.

In an example environment illustrated in diagram 100, one or more servers 102 and 104 may provide services for consumption. Services may offer a variety of products including storage, finance, media, connectivity, etc. The services may communicate in a variety of protocols including hypertext transmission protocol (http) or secure http (https). An adapter 106 may receive and transmit communications from/to service 1 (102) and service 2 (104) through networks 108. The network(s) 108 may be any network architecture providing access to the adapter 106 through wired or wireless technology.

Client devices 110 may include a variety of hardware such as desktop computer 112, laptop computer 114, a tablet device 116 such as a slate, and a smart phone 118. The client devices 110 may communicate with services 1 (102) and 2 (104) through the adapter 106. The adapter 106 may translate the communications between the services 102, 104, and the client devices 110. The adapter 106 may be updateable to accommodate changes in the services 102 and 104.

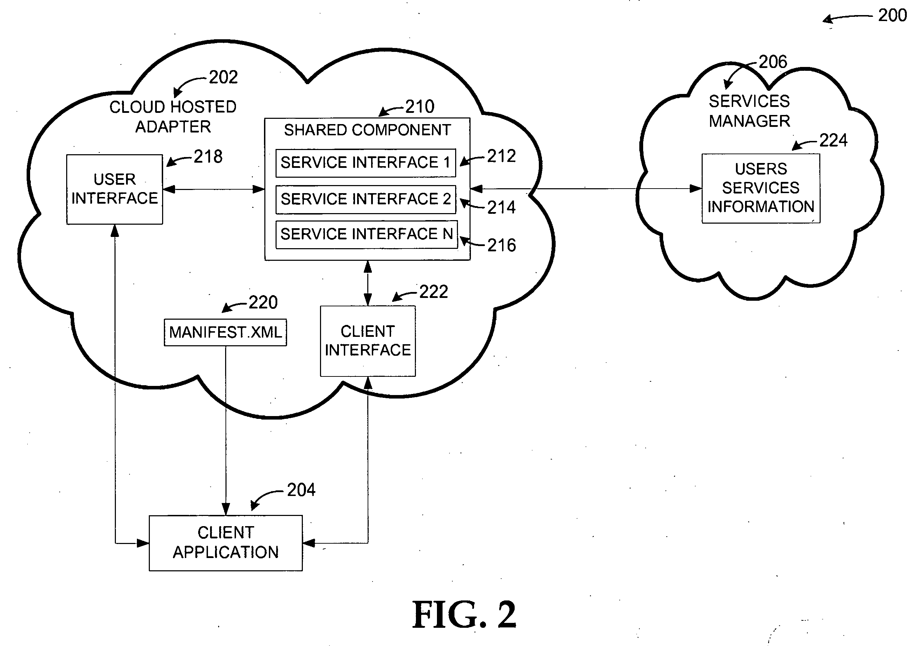

FIG. 2 illustrates a component diagram of an application providing client and service compatibility through cloud-hosted adapters according to embodiments. Diagram 200 displays an example application executing a cloud-hosted adapter 202 translating communications between a client application 204 and services manager 206.

According to some embodiments, the cloud-hosted adapter may receive a client communication such as a client request for a service at the client interface 222. The client interface 222 may also be used to translate a service reply to a client reply for transmission to the client application 204. In addition, a shared component 210 may serve as service interface entity. The shared component 210 may have multiple service interfaces 1 (212), 2 (214), ... , N (216). The service interfaces within a shared component 210 may be used to communicate with a services manager 206 providing services such as user services information 224. The shared component 210 may translate a client request to a service request and forward a service reply to the client interface 222.

According to other embodiments, the cloud-hosted adapter may also have a user interface 218 to provide the client application 204 with components of a user interface. The client application may utilize the user interface 218 to provide a service updateable user interface. The client application may transpose the user interface 218 partially or in its entirety. In addition, the cloud-hosted adapter 202 may also provide a manifest.xml 220 as an extended markup language (xml) formatted flat file to define a whitelist of domains and uniform resource locators (URLs). The client application 204 may utilize the whitelist to gain access to services. A whitelist may enable the client application 204 to request services in a specified address range from the cloud-hosted adapter 202.

According to yet other embodiments, the cloud-hosted adapter may receive the client request at a client interface and transmit the client reply from the client interface. The adapter may translate the service reply to the client reply at the client interface. In addition, the client interface may communicate with the client through common protocols, data structures, and data attribute mappings.

According to other embodiments, the adapter may transmit the service request from a shared component and receive the service reply at the shared component. The adapter may match the client request to a service interface from multiple service interfaces within the shared component. The adapter may also translate the client request to the service request at the service interface. Additionally, the shared component may communicate with the service through a service interface having common communication protocols, data structures, and data attribute mappings with the service. In an example scenario, the service interface may communicate with the service through http, while using data tables and matching attribute names.

According to further embodiments, the adapter may utilize generic communication schemes between the client and a client interface. The generic communication schemes may enable the adapter to maintain a constant client interface to aid in translations with dynamic services and changing service interfaces. The adapter may isolate the client from an update to the service by updating a shared component of the adapter while maintaining the client interface. The adapter may update a service interface within the shared component while maintaining the client interface. Additionally, the adapter may change support for additional services by adding or deleting service interfaces within the shared component.

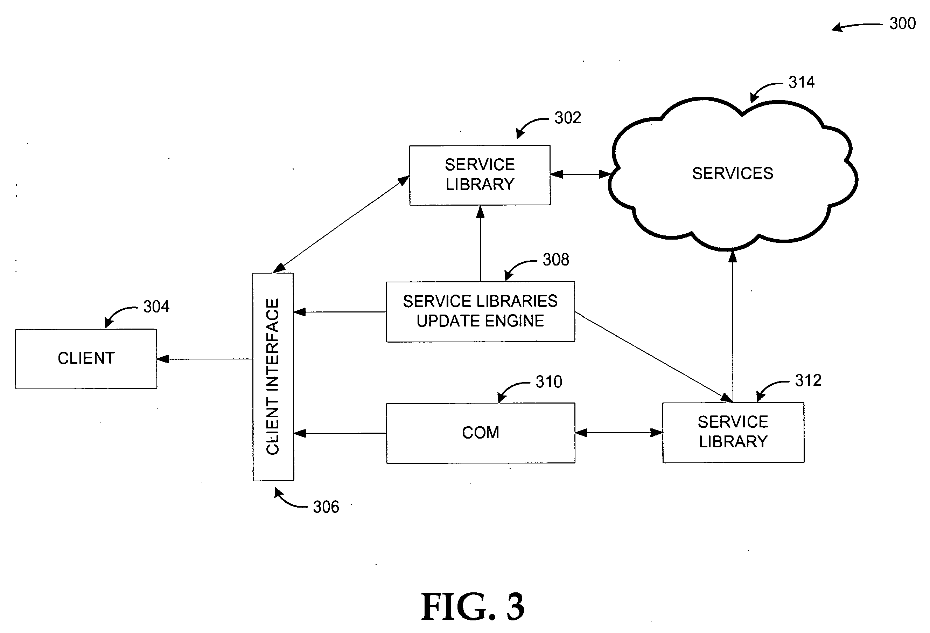

FIG. 3 illustrates an example library update mechanism of an application providing client and service compatibility through cloud-hosted adapters according to embodiments. Diagram 300 displays a service libraries update engine 308 updating service libraries 302 and 312 in communication with a client 304 through a client interface 306.

According to some embodiments, a client may communicate with services 314 through client interface 306 and service libraries 302 and 312 provided by a cloud-hosted adapter. The adapter may use libraries to act as the service interface for implementation in variety of scenarios. An example may include implementing service interfaces at a separate device from where the client interface may reside.

According to other embodiments, the cloud-hosted adapter may use a service libraries update engine 308 to maintain synchronicity with changes at services 314. The service libraries update engine 308 may update service libraries 302 and 312. The service libraries update engine 308 may also update any portions of the client interface to maintain communications with the service libraries 302 and 312. The service library 302 may be used to directly communicate between the client interface 306 and the services 314. Additionally, the service library 312 may use a standard communication protocol such as COM 310 to communicate with the client interface 306.

According to yet other embodiments, the adapter may authenticate a client through user tokens. The adapter may monitor user abuse based on the user tokens. Additionally, the adapter may perform an action to throttle the client reply or block the client in response to the abuse.

According to further embodiments, the adapter may update libraries associated with a shared component for communication with the service through an update engine. Additionally, the adapter may provide the updated libraries to a client interface for translation of the client request and the service reply.

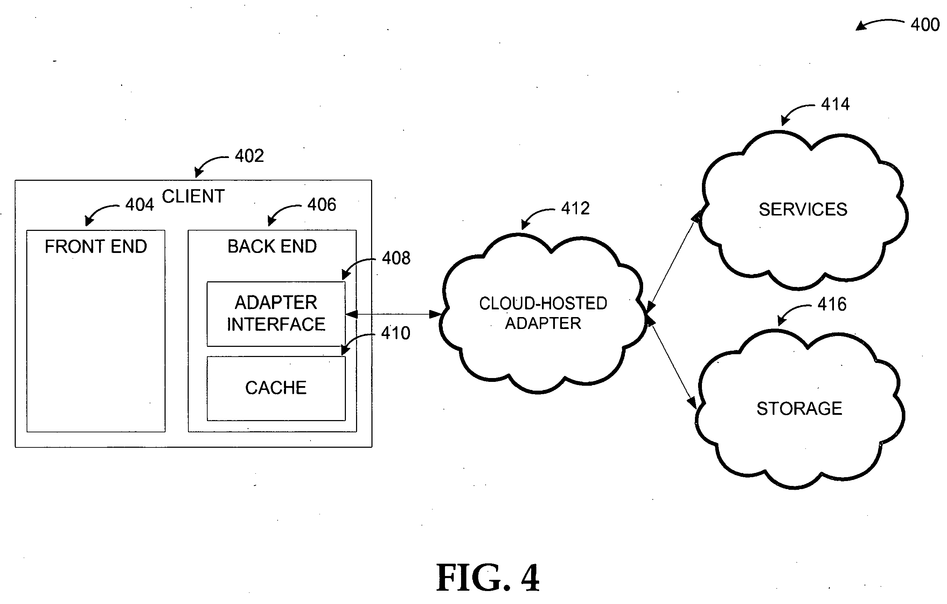

FIG. 4 illustrates an example client utilizing an application providing client and service compatibility through cloud-hosted adapters according to embodiments. Diagram 400 may display a cloud-hosted adapter 412 communicating with services 414 and component of a client 402.

According to some embodiments, a client 402 may have front end 404 and back end 406. The front end 404 may receive a service provided user interface from the adapter 412 as discussed above. The back end 406 may have an adapter interface 408 to communicate with the adapter 412. The back end 406 may also have cache 410 to store communications between the client 402 and adapter 412. In addition, the adapter 412 may communicate client requests to and replies from services 414 and storage 416 to the client 402.

According to yet other embodiments, the adapter may use a manifest extended markup language (XML) file to specify a whitelist of web domains and unified resource locators (URLs) accessible to the client. Limiting destinations may enable the client to focus on available services. Additionally, the adapter may provide a user interface component for utilization by substantial portions of the client user interface. The adapter may update user interface component to alter the client user interface according to service provided settings. Furthermore, an adapter may not accept communications from non-authenticated clients and services. The non-authenticated communications may include communications from third parties.

According to other embodiments, the client may be an application executing in a touch enabled device such as a tablet, a smartphone, etc. A user may provide touch and gesture combinations to the display surface of the touch enabled device to send a client request to the service. The adapter may manage communications between the client and the service. The adapter may also provide a service updateable user interface to the client. A client application may receive the user interface and display it on a display surface of the touch based device. The user may interact with the displayed user interface through touch and gesture input.

The example scenarios and schemas in FIG. 2 through 4 are shown with specific components, data types, and configurations. Embodiments are not limited to systems according to these example configurations. Providing client and service compatibility through cloud-hosted adapters may be implemented in configurations employing fewer or additional components in applications and user interfaces. Furthermore, the example schema and components shown in FIG. 2 through 4 and their subcomponents may be implemented in a similar manner with other values using the principles described herein.

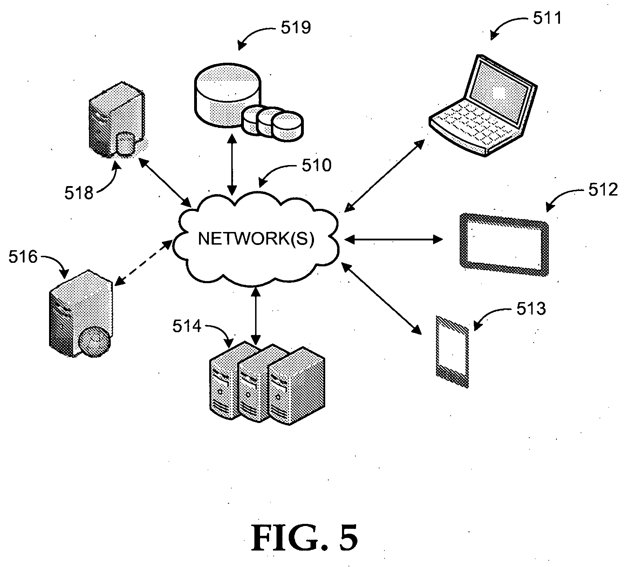

FIG. 5 is a networked environment, where a system according to embodiments may be implemented. Local and remote resources may be provided by one or more servers 514 or a single server (e.g. web server) 516 such as a hosted service. An application may communicate with client interfaces on individual computing devices such as a laptop 511, a tablet device 512 or a smart phone 513 ('client devices') through network(s) 510.

As discussed above, an application may provide client and service compatibility through cloud-hosted adapters. A cloud-hosted adapter may translate communications between a client and services. The adapter may update service interfaces to match changes within services while maintaining the client interface to isolate the client from updates. Client devices 511-513 may enable access to applications executed on remote server(s) (e.g. one of servers 514) as discussed previously. The server(s) may retrieve or store relevant data from/to data store(s) 519 directly or through database server 518.

Network(s) 510 may comprise any topology of servers, clients, Internet service providers, and communication media. A system according to embodiments may have a static or dynamic topology. Network(s) 510 may include secure networks such as an enterprise network, an unsecure network such as a wireless open network, or the Internet. Network(s) 510 may also coordinate communication over other networks such as Public Switched Telephone Network (PSTN) or cellular networks. Furthermore, network(s) 510 may include short range wireless networks such as Bluetooth or similar ones. Network(s) 510 provide communication between the nodes described herein. By way of example, and not limitation, network(s) 510 may include wireless media such as acoustic, RF, infrared and other wireless media.

Many other configurations of computing devices, applications, data sources, and data distribution systems may be employed to provide client and service compatibility through cloud-hosted adapters. Furthermore, the networked environments discussed in FIG. 5 are for illustration purposes only. Embodiments are not limited to the example applications, modules, or processes.

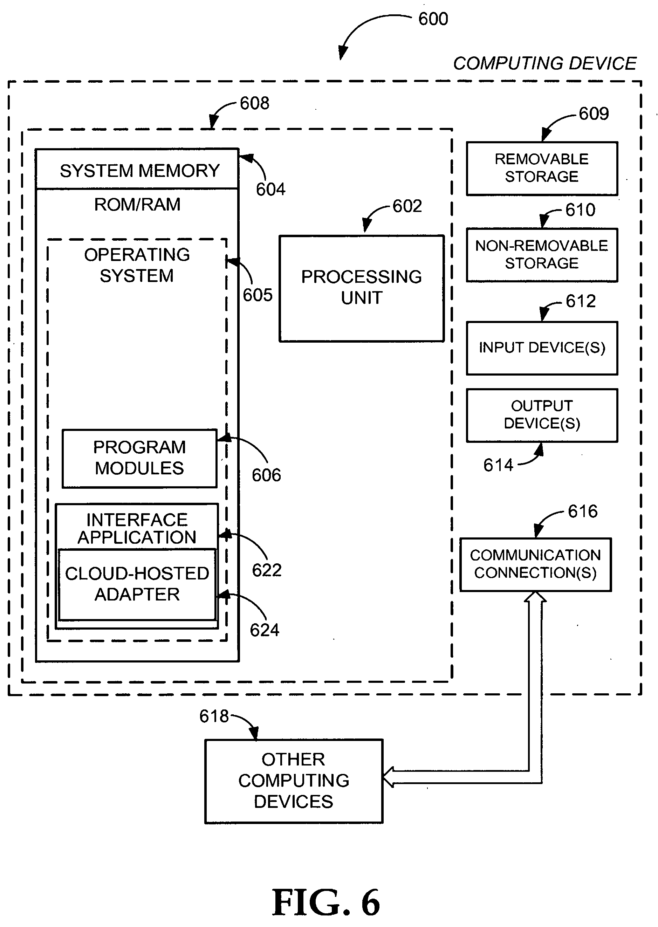

FIG. 6 and the associated discussion are intended to provide a brief, general description of a suitable computing environment in which embodiments may be implemented. With reference to FIG. 6, a block diagram of an example computing operating environment for an application according to embodiments is illustrated, such as computing device 600. In a basic configuration, computing device 600 may include at least one processing unit 602 and system memory 604. Computing device 600 may also include a plurality of processing units that cooperate in executing programs. Depending on the exact configuration and type of computing device, the system memory 604 may be volatile (such as RAM), non-volatile (such as ROM, flash memory, etc.) or some combination of the two. System memory 604 typically includes an operating system 605 suitable for controlling the operation of the platform, such as the WINDOWS® operating systems from MICROSOFT CORPORATION of Redmond, Washington. The system memory 604 may also include one or more software applications such as program modules 606, an interface application 622, and cloud-hosted adapter 624.

An application such as an interface application 622 may manage communications between clients and services to isolate clients from changes at the services according to embodiments. The cloud-hosted adapter 624 may deploy multiple client and service interfaces to manage communications translations from/to clients and services. The cloud-hosted adapter 624 may also provide service updateable user interfaces to clients. This basic configuration is illustrated in FIG. 6 by those components within dashed line 608.

Computing device 600 may have additional features or functionality. For example, the computing device 600 may also include additional data storage devices (removable and/or non-removable) such as, for example, magnetic disks, optical disks, or tape. Such additional storage is illustrated in FIG. 6 by removable storage 609 and non-removable storage 610. Computer readable storage media may include volatile and nonvolatile, removable and non-removable media implemented in any method or technology for storage of information, such as computer readable instructions, data structures, program modules, or other data. Computer readable storage media is a non-transitory computer readable memory device. System memory 604, removable storage 609 and non-removable storage 610 are all examples of computer readable storage media. Computer readable storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device 600. Any such computer readable storage media may be part of computing device 600. Computing device 600 may also have input device(s) 612 such as keyboard, mouse, pen, voice input device, touch input device, and comparable input devices. Output device(s) 614 such as a display, speakers, printer, and other types of output devices may also be included. These devices are well known in the art and need not be discussed at length here.

Computing device 600 may also contain communication connections 616 that allow the device to communicate with other devices 618, such as over a wireless network in a distributed computing environment, a satellite link, a cellular link, and comparable mechanisms. Other devices 618 may include computer device(s) that execute communication applications, storage servers, and comparable devices. Communication connection(s) 616 is one example of communication media. Communication media can include therein computer readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media.

Example embodiments also include methods. These methods can be implemented in any number of ways, including the structures described in this document. One such way is by machine operations, of devices of the type described in this document.

Another optional way is for one or more of the individual operations of the methods to be performed in conjunction with one or more human operators performing some. These human operators need not be co-located with each other, but each can be only with a machine that performs a portion of the program.

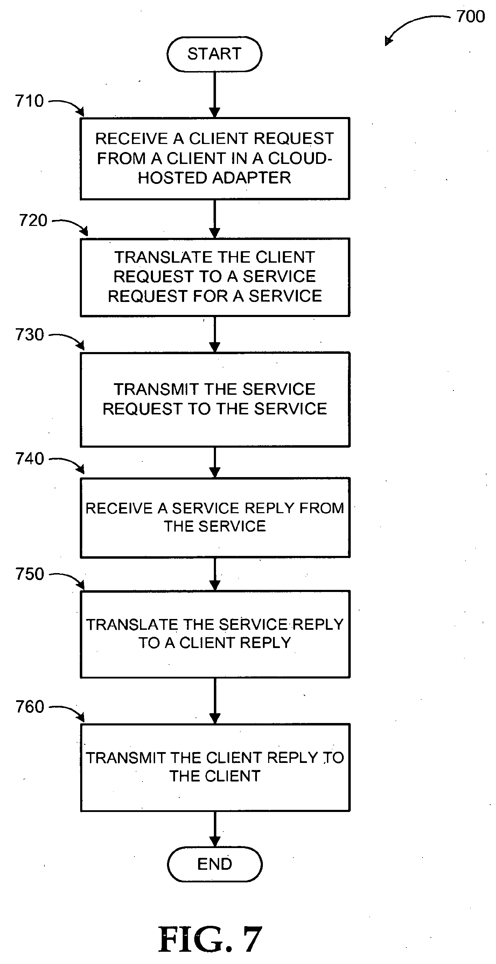

FIG. 7 illustrates a logic flow diagram for a process providing client and service compatibility through cloud-hosted adapters according to embodiments. Process 700 may be implemented by an application such as an interface application employing a cloud-hosted adapter to translate communications between clients and services to isolate clients from changes at the services in some examples.

Process 700 may begin with operation 710 where an application may receive a client request from a client at a client interface in a cloud-hosted adapter. The cloud-hosted adapter may translate the client request to a service request at a service interface for a service at operation 720. At operations 730 and 740 the adapter may transmit the service request to the service and receive a service reply from the service through the service interface. Subsequently, the adapter may translate the service reply to a client reply at the client interface at operation 750. At operation 760, the adapter may transmit the client reply to the client through the client interface.

In some embodiments, a transparency of the changes may be maintained at the service to the client through the update to a shared component, where a first set of common communication protocols, data structures, and data attribute mappings for facilitating client - client interface communications are unaffected by the update to the shared component. In other embodiments, a transparency of changes may be maintained to a number services communication with which is facilitated by the cloud-hosted adapter to the client through updates to a shared component and one or more service interfaces, where the first set of common communication protocols, data structures, and data attribute mappings for facilitating client - client interface communications are unaffected by the number of services.

Some embodiments may be implemented in a computing device that includes a communication module, a memory, and a processor, where the processor executes a method as described above or comparable ones in conjunction with instructions stored in the memory. Other embodiments may be implemented as a computer readable storage medium with instructions stored thereon for executing a method as described above or similar ones.

The operations included in process 700 are for illustration purposes. Providing client and service compatibility through cloud-hosted adapters according to embodiments may be implemented by similar processes with fewer or additional steps, as well as in different order of operations using the principles described herein.

The above specification, examples and data provide a complete description of the manufacture and use of the composition of the embodiments. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims and embodiments.

## Claims

1. A method executed on a computing device for providing client and service compatibility through cloud-hosted adapters (106, 202, 412, 624), the method comprising:
receiving a client request from a client (110, 204, 402) at a client interface (222) in a cloud-hosted adapter (106, 202, 412, 624);
translating the client request to a service request for a service (102, 104, 206, 414) at a service interface (212, 214, 216) of a shared component said shared component having multiple service interfaces (210) of the cloud-hosted adapter (106, 202, 412, 624) to provide compatibility between the client (110, 204, 402) and the service (102, 104, 206, 414) without the client (110, 204, 402) having knowledge of communication capability with the service (102, 104, 206, 414);
transmitting the service request from the service interface (212, 214, 216) of the shared component (210) of the cloud-hosted adapter (106, 202, 412, 624) to the service (102, 104, 206, 414);
receiving a service reply from the service (102, 104, 206, 414) at the service interface (212, 214, 216) of the shared component (210);
translating the service reply to a client reply at the client interface (222) of the cloud-hosted adapter (106, 202, 412, 624) to provide compatibility between the service (102, 104, 206, 414) and the client (110, 204, 402) without the service (102, 104, 206, 414) having knowledge of communication capability with the client (110, 204, 402); and
transmitting the client reply from the client interface (222) to the client (110, 204, 402),
wherein the client interface (222) communicates with the client (110, 204, 402) through a first set of generic communication protocols, data structures, and data attribute mappings, and
wherein the shared component (210) communicates with the service (102, 104, 206, 414) through one of said multiple service interfaces(212, 214, 216) having common communication protocols, data structures, and data attribute mappings with the service (102, 104, 206, 414).

2. A computing device for providing client and service compatibility through cloud-hosted adapters (106, 202, 412, 624), the computing device comprising:
a memory (604) configured to store instructions; and
a processor (602) coupled to the memory (604), the processor (602) executing an application (622) in conjunction with the instructions stored in the memory (604), wherein the application (622) is configured to:
receive a client request from a client (110, 204, 402) at a client interface (222) in a cloud-hosted adapter (106, 202, 412, 624);
translate the client request to a service request for a service (102, 104, 206, 414) at a service interface (212, 214, 216) of a shared component (210) said shared component having multiple service interfaces of the cloud-hosted adapter (106, 202, 412, 624) to provide compatibility between the client (110, 204, 402) and the service (102, 104, 206, 414) without the client (110, 204, 402) having knowledge of communication capability with the service (102, 104, 206, 414);
transmit the service request from the service interface (212, 214, 216) of the shared component (210) to the service (102, 104, 206, 414);
receive the service reply from the service (102, 104, 206, 414) at the service interface (212, 214, 216) of the shared component (210);
translate the service reply to a client reply at the client interface (222) of the cloud-hosted adapter (106, 202, 412, 624) to provide compatibility between the service (102, 104, 206, 414) and the client (110, 204, 402) without the service (102, 104, 206, 414) having knowledge of communication capability with the client (110, 204, 402); and
transmit the client reply from the client interface (222) to the client (110, 204, 402),
wherein the client interface (222) communicates with the client (110, 204, 402) through a first set of generic communication protocols, data structures, and data attribute mappings, and
wherein the shared component (210) communicates with the service (102, 104, 206, 414) through one of said multiple service interfaces (212, 214, 216) having common communication protocols, data structures, and data attribute mappings with the service (102, 104, 206, 414).

3. The computing device of claim 2, wherein the application is further configured to:
update libraries (302, 312) associated with the shared component (210) of the cloud-hosted adapter (106, 202, 412, 624) for communication with the service (102, 104, 206, 414) through an update engine.

4. The computing device of claim 3, wherein the application is further configured to:
provide the updated libraries (302, 312) to the client interface (222) of the cloud-hosted adapter (106, 202, 412, 624) for translation of the client request and the service reply.

5. The computing device of claim 2, wherein the application is further configured to:
enable modification of user experience of the client (110, 204, 402) without updating the client (110, 204, 402) through providing a client user interface (218) that is part of the cloud-hosted adapter (106, 202, 412, 624).

6. A computer-readable memory device with instructions stored thereon for providing client and service compatibility through cloud-hosted adapters (106, 202, 412, 624), the instructions comprising:
receiving a client request from a client (110, 204, 402) at a client interface (222) in a cloud-hosted adapter (106, 202, 412, 624) through a first set of generic communication protocols, data structures, and data attribute mappings;
translating the client request to a service request for a service (102, 104, 206, 414) at a service interface (212, 214, 216) of a shared component said shared component having multiple interfaces (210) of the cloud-hosted adapter (106, 202, 412, 624) to provide compatibility between the client (110, 204, 402) and the service (102, 104, 206, 414) without the client (110, 204, 402) having knowledge of communication capability with the service (102, 104, 206, 414);
transmitting the service request from the service interface (212, 214, 216) of the shared component (210) to the service (102, 104, 206, 414), wherein the shared component (210) communicates with the service (102, 104, 206, 414) through one of said multiple service interfaces (212, 214, 216) having common communication protocols, data structures, and data attribute mappings with the service (102, 104, 206, 414);
receiving the service reply from the service (102, 104, 206, 414) at the service interface (21, 214, 216) of the shared component (210);
translating the service reply to a client reply at the client interface (222) of the cloud-hosted adapter (106, 202, 412, 624) to provide compatibility between the service (102, 104, 206, 414) and the client (110, 204, 402) without the service (102, 104, 206, 414) having knowledge of communication capability with the client (110, 204, 402); and
transmitting the client reply from the client interface (222) to the client (110, 204, 402).

## Patentansprüche

1. Ein Verfahren, das auf einer Datenverarbeitungsvorrichtung ausgeführt wird, zum Bereitstellen von Client- und Dienstkompatibilität durch cloud-gehostete Adapter (106, 202, 412, 624), wobei das Verfahren umfasst:
Empfangen einer Clientanfrage von einem Client (110, 204, 402) in einem Clientinterface (222) in einem cloud-gehosteten Adapter (106, 202, 412, 624);
Übersetzen der Clientanfrage in eine Dienstanfrage für einen Dienst (102, 104, 206, 414) in einem Dienstinterface (212, 214, 216) einer gemeinsamen Komponente (210) des cloud-gehosteten Adapters (106, 202, 412, 624), wobei die gemeinsame Komponente mehrere Interfaces hat, um Kompatibilität zwischen dem Client (110, 204, 402) und dem Dienst (102, 104, 206, 414) bereit zu stellen, ohne dass der Client (110, 204, 402) Kenntnis von einer Kommunikationsfähigkeit mit dem Dienst (102, 104, 206, 414) hat;
Übermitteln der Dienstanfrage von dem Dienstinterface (212, 214, 216) der gemeinsamen Komponente (210) des cloud-gehosteten Adapters (106, 202, 412, 624) an den Dienst (102, 104, 206, 414);
Empfangen einer Dienstantwort von dem Dienst (102, 104, 206, 414) in dem Dienstinterface (212, 214, 216) der gemeinsamen Komponente (210);
Übersetzen der Dienstantwort in eine Clientantwort in dem Clientinterface (222) des cloudgehosteten Adapters (106, 202, 412, 624), um eine Kompatibilität zwischen dem Dienst (102, 104, 206, 414) und dem Client (110, 204, 402) bereit zu stellen, ohne dass der Dienst (102, 104, 206, 414) Kenntnis von einer Kommunikationsfähigkeit mit dem Client (110, 204, 402) hat und
Übermitteln der Clientantwort von dem Clientinterface (222) an den Client (110, 204, 402),
wobei das Clientinterface (222) mit dem Client (110, 204, 402) durch einen ersten Satz generischer Kommunikationsprotokolle, Datenstrukturen und Datenattributzuweisungen kommuniziert und
wobei die gemeinsame Komponente (210) mit dem Dienst (102, 104, 206, 414) durch eines der mehreren Dienstinterfaces (212, 214, 216) kommuniziert, die gemeinsame Kommunikationsprotokolle, Datenstrukturen und Datenattributzuweisungen mit dem Dienst (102, 104, 206, 414) haben.

2. Eine Datenverarbeitungsvorrichtung zum Bereitstellen von Client- und Dienstkompabilität durch cloud-gehostete Adapter (106, 202, 412, 624), wobei die Datenverarbeitungsvorrichtung umfasst:
einen Speicher (604), der ausgelegt ist, Instruktionen zu speichern und
einen an den Speicher gekoppelten Prozessor (602), wobei der Prozessor (602) eine Anwendung (622) in Zusammenhang mit den in dem Speicher (604) gespeicherten Instruktionen ausführt, wobei die Anwendung (622) ausgelegt ist zum:
Empfangen einer Clientanfrage von einem Client (110, 204, 402) in einem Clientinterface (222) in einem cloud-gehosteten Adapter (106, 202, 412, 624);
Übersetzen der Clientanfrage in eine Dienstanfrage für einen Dienst (102, 104, 206, 414) in einem Dienstinterface (212, 214, 216) einer gemeinsamen Komponente (210) des cloudgehosteten Adapters (106, 202, 412, 624), wobei die gemeinsame Komponente mehrere Interfaces hat, um Kompatibilität zwischen dem Client (110, 204, 402) und dem Dienst (102, 104, 206, 414) bereit zu stellen, ohne dass der Client (110, 204, 402) Kenntnis von einer Kommunikationsfähigkeit mit dem Dienst (102, 104, 206, 414) hat;
Übermitteln der Dienstanfrage von dem Dienstinterface (212, 214, 216) der gemeinsamen Komponente (210) an den Dienst (102, 104, 206, 414);
Empfangen der Dienstantwort von dem Dienst (102, 104, 206, 414) in dem Dienstinterface (212, 214, 216) der gemeinsamen Komponente (210);
Übersetzen der Dienstantwort in eine Clientantwort in dem Clientinterface (222) des cloudgehosteten Adapters (106, 202, 412, 624), um eine Kompatibilität zwischen dem Dienst (102, 104, 206, 414) und dem Client (110, 204, 402) bereit zu stellen, ohne dass der Dienst (102, 104, 206, 414) Kenntnis von einer Kommunikationsfähigkeit mit dem Client (110, 204, 402) hat und
Übermitteln der Clientantwort von dem Clientinterface (222) an den Client (110, 204, 402),
wobei das Clientinterface (222) mit dem Client (110, 204, 402) durch einen ersten Satz generischer Kommunikationsprotokolle, Datenstrukturen und Datenattributzuweisungen kommuniziert und
wobei die gemeinsame Komponente (210) mit dem Dienst (102, 104, 206, 414) durch eines der mehreren Dienstinterfaces (212, 214, 216) kommuniziert, die gemeinsame Kommunikationsprotokolle, Datenstrukturen und Datenattributzuweisungen mit dem Dienst (102, 104, 206, 414) haben.

3. Die Datenverarbeitungsvorrichtung nach Anspruch 2, wobei die Anwendung weiter ausgelegt ist zum:
Aktualisieren von Bibliotheken (302, 312), die mit der gemeinsamen Komponente (210) des cloud-gehosteten Adapters (106, 202, 412, 624) assoziiert sind, zur Kommunikation mit dem Dienst (102, 104, 206, 414) durch eine Aktualisierungsmaschine.

4. Die Datenverarbeitungsvorrichtung nach Anspruch 3, wobei die Anwendung weiter ausgelegt ist:
die aktualisierten Bibliotheken (302, 312) dem Clientinterface (222) des cloud-gehosteten Adapters (106, 202, 412, 624) zur Übersetzung der Clientanfrage und der Dienstantwort bereit zu stellen.

5. Die Datenverarbeitungsvorrichtung nach Anspruch 2, wobei die Anwendung weiter ausgelegt ist zum:
Ermöglichen einer Modifikation einer Nutzererfahrung des Client (110, 204, 402) ohne den Client (110, 204, 402) durch Bereitstellen eines Clientnutzerinterface (218), das Teil des cloudgehosteten Adapters (106, 202, 412, 624) ist, zu aktualisieren.

6. Eine computerlesbare Speichervorrichtung mit darauf gespeicherten Instruktionen zum Bereitstellen von Client- und Dienstkompatibilität durch cloud-gehostete Adapter (106, 202, 412, 624), wobei die Instruktionen umfassen:
Empfangen einer Clientanfrage von einem Client (110, 204, 402) in einem Clientinterface (222) in einem cloud-gehosteten Adapter (106, 202, 412, 624) durch einen ersten Satz generischer Kommunikationsprotokolle, Datenstrukturen und Datenattributzuweisungen;
Übersetzen der Clientanfrage in eine Dienstanfrage für einen Dienst (102, 104, 206, 414) in einem Dienstinterface (212, 214, 216) einer gemeinsamen Komponente (210) des cloudgehosteten Adapters (106, 202, 412, 624), wobei die gemeinsame Komponente mehrere Interfaces hat, um Kompatibilität zwischen dem Client (110, 204, 402) und dem Dienst (102, 104, 206, 414) bereit zu stellen, ohne dass der Client (110, 204, 402) Kenntnis von einer Kommunikationsfähigkeit mit dem Dienst (102, 104, 206, 414) hat;
Übermitteln der Dienstanfrage von dem Dienstinterface (212, 214, 216) der gemeinsamen Komponente (210) an den Dienst (102, 104, 206, 414), wobei die gemeinsame Komponente (210) mit dem Dienst (102, 104, 206, 414) durch eines der mehreren Dienstinterfaces (212, 214, 216) kommuniziert, die gemeinsame Kommunikationsprotokolle, Datenstrukturen und Datenattributzuweisungen mit dem Dienst (102, 104, 206, 414) haben;
Empfangen der Dienstantwort von dem Dienst (102, 104, 206, 414) in dem Dienstinterface (212, 214, 216) der gemeinsamen Komponente (210);
Übersetzen der Dienstantwort in eine Clientantwort in dem Clientinterface (222) des cloudgehosteten Adapters (106, 202, 412, 624), um eine Kompatibilität zwischen dem Dienst (102, 104, 206, 414) und dem Client (110, 204, 402) bereit zu stellen, ohne dass der Dienst (102, 104, 206, 414) Kenntnis von einer Kommunikationsfähigkeit mit dem Client (110, 204, 402) hat und
Übermitteln der Clientantwort von dem Clientinterface (222) an den Client (110, 204, 402).

## Revendications

1. Procédé exécuté sur un dispositif informatique pour assurer une compatibilité client-service par l'intermédiaire d'adaptateurs hébergés en nuage (106, 202, 412, 624), le procédé comprenant :
la réception d'une demande de client provenant d'un client (110, 204, 402) au niveau d'une interface de client (222) dans un adaptateur hébergé en nuage (106, 202, 412, 624) ;
la traduction de la demande de client en une demande de service pour un service (102, 104, 206, 414) au niveau d'une interface de service (212, 214, 216) d'un composant partagé, ledit composant partagé ayant de multiples interfaces de service (210) de l'adaptateur hébergé en nuage (106, 202, 412, 624) pour assurer la compatibilité entre le client (110, 204, 402) et le service (102, 104, 206, 414) sans que le client (110, 204, 402) ait connaissance de la capacité de communication avec le service (102, 104, 206, 414) ;
la transmission de la demande de service depuis l'interface de service (212, 214, 216) du composant partagé (210) de l'adaptateur hébergé en nuage (106, 202, 412, 624) au service (102, 104, 206, 414),
la réception d'une réponse de service depuis le service (102, 104, 206, 414) au niveau de l'interface de service (212, 214, 216) du composant partagé (210) ;
la traduction de la réponse de service en une réponse de client au niveau de l'interface de client (222) de l'adaptateur hébergé en nuage (106, 202, 412, 624) pour assurer la compatibilité entre le service (102, 104, 206, 414) et le client (110, 204, 402) sans que le service (102, 104, 206, 414) ait connaissance de la capacité de communication avec le client (110, 204, 402) ; et
la transmission de la réponse de client de l'interface de client (222) au client (110, 204, 402),
dans lequel l'interface de client (222) communique avec le client (110, 204, 402) par l'intermédiaire d'un premier ensemble de protocoles de communication, structures de données et mappages d'attribut de données, génériques, et
dans lequel le composant partagé (210) communique avec le service (102, 104, 206, 414) par l'intermédiaire de l'une desdites multiples interfaces de service (212, 214, 216) ayant des protocoles de communication, des structures de données et des mappages d'attribut de données, communs avec le service (102, 104, 206, 414).

2. Dispositif informatique pour assurer une compatibilité client-service par l'intermédiaire d'adaptateurs hébergés en nuage (106, 202, 412, 624), le dispositif informatique comprenant :
une mémoire (604) configurée pour enregistrer des instructions ; et
un processeur (602) couplé à la mémoire (604) le processeur (602) exécutant une application (622) conjointement avec les instructions enregistrées dans la mémoire (604), dans lequel l'application (622) est configurée pour :
recevoir une demande de client provenant d'un client (110, 204, 402) au niveau d'une interface de client (222) dans un adaptateur hébergé en nuage (106, 202, 412, 624) ;
traduire la demande de client en une demande de service pour un service (102, 104, 206, 414) au niveau d'une interface de service (212, 214, 216) d'un composant partagé (210), ledit composant partagé ayant de multiples interfaces de service de l'adaptateur hébergé en nuage (106, 202, 412, 624) pour assurer la compatibilité entre le client (110, 204, 402) et le service (102, 104, 206, 414) sans que le client (110, 204, 402) ait connaissance de la capacité de communication avec le service (102, 104, 206, 414) ;
transmettre la demande de service de l'interface de service (212, 214, 216) du composant partagé (210) au service (102, 104, 206, 414),
recevoir la réponse de service depuis le service (102, 104, 206, 414) au niveau de l'interface de service (212, 214, 216) du composant partagé (210) ;
traduire la réponse de service en une réponse de client au niveau de l'interface de client (222) de l'adaptateur hébergé en nuage (106, 202, 412, 624) pour assurer la compatibilité entre le service (102, 104, 206, 414) et le client (110, 204, 402) sans que le service (102, 104, 206, 414) ait connaissance de la capacité de communication avec le client (110, 204, 402) ; et
transmettre la réponse de client de l'interface de client (222) au client (110, 204, 402),
dans lequel l'interface de client (222) communique avec le client (110, 204, 402) par l'intermédiaire d'un premier ensemble de protocoles de communication, structures de données et mappages d'attribut de données, génériques, et
dans lequel le composant partagé (210) communique avec le service (102, 104, 206, 414) par l'intermédiaire de l'une desdites multiples interfaces de service (212, 214, 216) ayant des protocoles de communication, des structures de données et des mappages d'attribut de données, communs avec le service (102, 104, 206, 414).

3. Dispositif informatique selon la revendication 2, dans lequel l'application est configurée en outre pour :
mettre à jour des bibliothèques (302, 312) associées avec le composant partagé (210) de l'adaptateur hébergé en nuage (106, 202, 412, 624) pour communication avec le service (102, 104, 206, 414) par l'intermédiaire d'un moteur de mise à jour.

4. Dispositif informatique selon la revendication 3, dans lequel l'application est configurée en outre pour :
fournir les bibliothèques mises à jour (302, 312) à l'interface de client (222) de l'adaptateur hébergé en nuage (106, 202, 412, 624) pour traduction de la demande de client et la réponse de service.

5. Dispositif informatique selon la revendication 2, dans lequel l'application est configurée en outre pour :
permettre la modification de l'expérience d'utilisateur du client (110, 204, 402) sans mettre à jour le client (110, 204, 402) en fournissant une interface d'utilisateur de client (218) faisant partie de l'adaptateur hébergé en nuage (106, 202, 412, 624).

6. Dispositif de mémoire lisible par ordinateur dans lequel sont enregistrées des instructions pour assurer une compatibilité client-service par l'intermédiaire d'adaptateurs hébergés en nuage (106, 202, 412, 624), les instructions comprenant :
la réception d'une demande de client provenant d'un client (110, 204, 402) au niveau d'une interface de client (222) dans un adaptateur hébergé en nuage (106, 202, 412, 624) par l'intermédiaire d'un premier ensemble de protocoles de communication, structures de données et mappages d'attribut de données, génériques ;
la traduction de la demande de client en une demande de service pour un service (102, 104, 206, 414) au niveau d'une interface de service (212, 214, 216) d'un composant partagé, ledit composant partagé ayant de multiples interfaces (210) de l'adaptateur hébergé en nuage (106, 202, 412, 624) pour assurer la compatibilité entre le client (110, 204, 402) et le service (102, 104, 206, 414) sans que le client (110, 204, 402) ait connaissance de la capacité de communication avec le service (102, 104, 206, 414) ;
la transmission de la demande de service de l'interface de service (212, 214, 216) du composant partagé (210) au service (102, 104, 206, 414), dans lequel le composant partagé (210) communique avec le service (102, 104, 206, 414) par l'intermédiaire de l'une desdites multiples interfaces de service (212, 214, 216) ayant des protocoles de communication, des structures de données et des mappages d'attribut de données, communs avec le service (102, 104, 206, 414)
la réception de la réponse de service depuis le service (102, 104, 206, 414) au niveau de l'interface de service (21, 214, 216) du composant partagé (210) ;
la traduction de la réponse de service en une réponse de client au niveau de l'interface de client (222) de l'adaptateur hébergé en nuage (106, 202, 412, 624) pour assurer la compatibilité entre le service (102, 104, 206, 414) et le client (110, 204, 402) sans que le service (102, 104, 206, 414) ait connaissance de la capacité de communication avec le client (110, 204, 402) ; et
la transmission de la réponse de client de l'interface de client (222) au client (110, 204, 402).
